(19) Europäisches Patentamt / European Patent Office / Office européen des brevets

(11) **EP 2 220 760 B1**

(12) **EUROPÄISCHE PATENTSCHRIFT**

(45) Veröffentlichungstag und Bekanntmachung des Hinweises auf die Patenterteilung:
**17.10.2012 Patentblatt 2012/42**

(21) Anmeldenummer: **08862208.9**

(22) Anmeldetag: **21.11.2008**

(51) Int Cl.:
**H02P 25/02** $^{(2006.01)}$

(86) Internationale Anmeldenummer:
**PCT/EP2008/009855**

(87) Internationale Veröffentlichungsnummer:
**WO 2009/077053 (25.06.2009 Gazette 2009/26)**

(54) **ANORDNUNG MIT EINEM SCHWINGENDEN MOTOR UND VERFAHREN ZUR REGELUNG EINES SCHWINGENDEN MOTORS**

ARRANGEMENT HAVING OSCILLATING MOTOR AND METHOD FOR CONTROLLING AN OSCILLATING MOTOR

SYSTÈME À MOTEUR OSCILLANT ET PROCÉDÉ DE RÉGULATION D'UN MOTEUR OSCILLANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.12.2007 DE 102007060466**

(43) Veröffentlichungstag der Anmeldung:
**25.08.2010 Patentblatt 2010/34**

(73) Patentinhaber: **Braun GmbH**
**61476 Kronberg/Taunus (DE)**

(72) Erfinder:
• **LÜCKEL, Kris**
**61476 Kronberg/Ts (DE)**
• **SKOPP, Frank, Stefan**
**65760 Eschborn (DE)**

(74) Vertreter: **Sievers, Uwe**
**Braun GmbH**
**Patentabteilung**
**Frankfurter Strasse 145**
**61476 Kronberg im Taunus (DE)**

(56) Entgegenhaltungen:
**DE-A1- 10 229 319    US-A- 5 424 637**

EP 2 220 760 B1

**Beschreibung**

Die Erfindung betrifft eine Anordnung mit einem schwingenden Motor und ein Verfahren zur Regelung eines schwingenden Motors (Direktantrieb), bei dem eine Kenngröße des Motors zur Ansteuerung des Motors verwendet wird, insbesondere zur amplitudenstabilisierenden Ansteuerung bei variierender Belastung des Motors.

Eine solche Anordnung und ein solches Verfahren sind aus der DE 102 29 319 A1 bekannt, bei der eine Bewegungsgröße des schwingenden Motors zu einem Zeitpunkt bestimmt wird, an dem einer Spule des Motors ein Strom zugeführt wird, um den Motor in eine Schwingungsbewegung zu versetzen. Die Bewegungsgröße des Motors wird von einem Regelkreis verwendet, um in deren Abhängigkeit die zukünftige Stromzufuhr des Motors zu bestimmen.

Nachteilig bei der beschriebenen Anordnung und dem beschriebenen Verfahren ist, dass die Induktivität des Motors als konstant vorausgesetzt wird. Tatsächlich ist die Induktivität aber abhängig von der Position der Motorkomponenten zueinander, der Stromaufnahme und der Stromänderung zum Messzeitpunkt. Eine Vernachlässigung der nichtlinearen Induktivität führt dazu, dass die Motorsteuerung instabil werden kann oder die Regelung eine andere als die vorgegebene Amplitude ergibt, insbesondere, wenn der Motor einer starken Belastung ausgesetzt ist.

In der US 5,424,637 wird beschrieben, wie die Position eines Aktuatorankers zu einer Aktuatorspule bestimmt werden kann. Dabei kann die nichtlineare Charakteristik der Induktivität des Aktuators dadurch berücksichtigt werden, dass die Induktivitätswerte in Abhängigkeit von der Ankerposition und des Aktuatorspulenstromes mittels einer Software aus einer Look-Up-Tabelle oder aus einer mathematischen Gleichung bestimmt werden.

Nachteilig dabei ist allerdings, dass solche Tabellen und die notwendige Software nicht mittels kostengünstigen und auf geringer Fläche realisierbaren Bauteilen umgesetzt werden können.

Aufgabe der Erfindung ist es daher, eine Anordnung und ein Verfahren zur Regelung eines schwingenden Motors zur Verfügung zu stellen, bei der die bekannten Nachteile umgangen werden und insbesondere eine kostengünstige Realisierung möglich ist.

Die Aufgabe wird gelöst durch eine Anordnung nach Anspruch 1 und ein Verfahren nach Anspruch 6. Weitere Ausführungsformen sind in den abhängigen Ansprüchen angegeben.

Die Anordnung weist einen schwingenden Motor (Direktantrieb) auf, der in einem Betriebszustand von einem Regelkreis angesteuert wird. Eine Sensoranordnung bestimmt im Betriebszustand eine elektrische Kenngröße des Motors zu einem vorgegebenen Messzeitpunkt während eines Schwingungsvorgangs bzw. an einer Messposition (also bei einer Auslenkung des Motors aus seiner Ruheposition) und eine Recheneinheit bestimmt im Betriebszustand eine Bewegungsgröße des Motors (etwa die Geschwindigkeit des Läufers) aus zumindest der elektrischen Kenngröße und einem konstant vorgegebenen Induktivitätswert des Motors, wobei der Messzeitpunkt bzw. die Messposition so vorgegeben sind, das die Induktivität des Motors auch bei unterschiedlichen Strömen durch den Motor zumindest in einem gegebenen Stromintervall näherungsweise konstant bleibt. Der Messzeitpunkt bzw. die Messposition ist dabei insbesondere durch eine Optimierung bestimmt worden, bei der eine Abweichung von einem konstanten Induktivitätswert minimiert wird. Insbesondere sollte in dem gegebenen Stromintervall die Abweichung der auftretenden Induktivitätswerte $\pm 10\%$ von einem mittleren Induktivitätswert (also dem als konstant angenommenen Induktivitätswert) nicht überschreiten, wobei Abweichungen von $\pm 5\%$ eine genauere Regelung erlauben, $\pm 2.5\%$ eine noch bessere Regelung erlauben und $\pm 1\%$ eine sehr gute Regelung ergeben. Das gegebene Stromintervall $[I_1, I_2]$, in dem der näherungsweise konstante Induktivitätswert erreicht werden soll, liegt im insgesamt zugänglichen Strombereich, der von $I_0 = 0$ A bis $I_{max}$ reicht, wobei $I_{max}$ durch den gegebenen Motor bedingt ist und abhängig ist vom Innenwiderstand R der Spule, der von der Spannungsquelle bereit gestellten Spannung und der bewegungsinduzierten Spannung. Der erste Stromwert des Intervalls, $I_1$, liegt typischerweise bei wenigen Prozent des maximalen Stroms, $I_1 \approx 1\text{-}10\% I_{max}$, da der Induktivitätswert bei einem von Null ansteigenden Strom durch die schnelle Stromänderung ebenfalls schnell ansteigt, was der Optimierung auf einen näherungsweise konstanten Wert entgegen steht, und weiterhin deshalb Messungen zur Bestimmung der zeitlichen Stromänderung, $dI / dt \approx \Delta I / \Delta t = (I(t_b) - I(t_a))/(t_b - t_a)$, sehr schnell erfolgen müssten, um einen verlässlichen Wert für die Stromänderung zu erhalten. Die Messung der Stromänderung ist notwendig, um die Bewegungsgröße des Motors aus der elektrischen Kenngröße zu bestimmen. Der zweite Stromwert des Intervalls liegt bei etwa $I_2 \approx 15\text{-}80\%$ $I_{max}$, wobei hier die geringe Steigung bei hohen Strömen gegen den maximalen Strom zu einem durch Rauschen beeinflussten Wert führt und dann die Stromänderung ebenfalls nur wenig verlässlich bestimmt werden kann. In verschiedenen Ausführungsformen wird deshalb $I_2 \approx 15\text{-}50\% I_{max}$ oder $I_2 \approx 20\text{-}40\% I_{max}$ oder $I_2 \approx 20\text{-}30\% I_{max}$ verwendet. Wie in der DE 102 29 319 A1 beschrieben, werden typischerweise zwei Messungen um den vorgegebenen Messzeitpunkt (in der DE 102 29 319 A1 ist dies ein fest vorgegebener Zeitpunkt) bzw. um die Messposition durchgeführt, um den Strom und die Stromänderung zu bestimmen, wobei $I = (I(f_a)+I(t_b))/2$ und $dI / dt \approx \Delta I / \Delta t = (I(t_b)- I(t_a))/(t_b - t_a)$ gilt. Ist der Messzeitpunkt mit $t_x$ vorgegeben, dann können also die beiden Messungen zu den Zeitpunkten $t_a = t_x - \Delta t/2$ und $t_b = t_x + \Delta t/2$ durchgeführt werden. Hierbei kann $\Delta t$ insbesondere durch die Geschwindigkeit des Messsystems bedingt sein, denn die Steigung der zu messenden Größe sollte sich zwischen den beiden Messpunkten nicht zu sehr ändern.

Ein schwingender Motor ist in der Regel als ein System aufgebaut, bei dem mittels einer als Elektromagnet betriebenen Spule Energie zugeführt wird, um einen mit einem Permanentmagneten verbundenen Läufer in Schwingung zu versetzen und in einer definierten Schwingung zu halten. Damit jeweils zum richtigen Zeitpunkt die richtige Energiemenge zugeführt werden kann, ist es erforderlich, den Bewegungszustand des Elektromotors zu erfassen.

Bei schwingenden Motoren (etwa linear oszillierenden Direktantrieben, wie sie in Trockenrasierern verwendet werden) handelt es sich um in Resonanz schwingende Systeme, bei dem der Läufer, der etwa als Permanentmagnet ausgestaltet sein kann bzw. einen Permanentmagneten aufweist, durch ein Magnetfeld, dass von einer zeitweise stromdurchflossenen Statorspule erzeugt wird, in Schwingung versetzt wird und wobei der Läufer durch Rückstellkräfte, etwa Federkräfte, wieder in die Ausgangslage zurückgeführt wird. Der schwingende Motor kann beispielsweise als linear vibrierender Motor oder als um eine Achse oszillierender Motor ausgestaltet sein. Die Resonanzfrequenz wird durch die Masse des Läufers und die Rückstellkräfte bestimmt. Der schwingende Motor schwingt unabhängig von seiner Schwingungsamplitude immer mit der gleichen Frequenz, sodass bei einer Motorbelastung im Wesentlichen nicht die Schwingungsfrequenz geändert wird, wie bei einem Gleichstrommotor, sondern die Schwingungsamplitude wird reduziert. Durch eine durch die Kenntnis der Schwingungsamplitude bzw. der Läufergeschwindigkeit zu einem bestimmten Zeitpunkt in der Schwingungsperiode geregelte Ansteuerung, wird der schwingende Motor auch bei variierender Motorbelastung bei einer gleich bleibenden Schwingungsamplitude gehalten. Die Bewegungsgröße, typischerweise die Läufergeschwindigkeit bzw. die Schwingungsamplitude, kann direkt gemessen werden, was aber zusätzliche Sensoren (etwa Hall-Sensoren) und damit zusätzliche Kosten und damit auch zusätzliches Bauvolumen erfordert. Deshalb wird bei einem schwingenden Motor die zur Regelung notwendige Bewegungsgröße typischer-weise indirekt und sensorlos bestimmt, indem die Statorspule als Sensor verwendet wird, wie es in der DE 102 29 319 A1 beschrieben ist. Dort werden etwa die an der Spule anliegende Motorspannung und der durch die Spule fließende Strom gemessen und mit Kenntnis der Motorinduktivität kann dann die Läufergeschwindigkeit berechnet werden.

Die hier beschriebene Anordnung und das entsprechende Verfahren können aber auch mit einem zusätzlichen Sensor ausgeführt sein, der die Bewegungsgröße ebenfalls indirekt über eine elektrische Kenngröße des Motors bestimmt und zu deren Berechnung die Motorinduktivität notwendig ist.

In einer Ausführungsform der Anordnung ist für mindestens zwei Schwingungsamplituden je ein Messzeitpunkt bzw. je eine Messposition derart vorgegeben, dass die Induktivität des Motors auch bei unterschiedlichen und bei den unterschiedlichen Schwingungsamplituden zumindest in einem interessierenden Stromintervall näherungsweise konstant bleibt. Die Messzeitpunkte bzw. Messpositionen sind dabei insbesondere mittels einer Optimierung bestimmt worden, bei der ein Abweichungswert minimiert wurde. Dann kann ein einziger, konstanter Induktivitätswert für die Regelung bei allen Schwingungsamplituden verwendet werden.

In einer anderen Ausführungsform wird die Sensoranordnung durch eine Statorspule des Motors gebildet.

In einer weiteren Ausführungsform hat die Anordnung einen Speicher zum Speichern des Messzeitpunktes bzw. der Messposition. Der Speicher kann auch oder anstatt zum Speichern des konstanten Induktivitätswertes verwendet werden.

In einer zusätzlichen Ausführungsform sind der Regelkreis und/oder die Recheneinheit und/oder der Speicher durch einen Mikrocontroller realisiert. Dies ermöglicht eine platzsparende Realisierung.

Das Verfahren zur Regelung eines schwingenden Motors umfasst die Schritte:

a) Bereitstellen eines Messzeitpunktes oder einer Messposition innerhalb einer Schwingungsperiode des Motors zur Bestimmung einer elektrischen Kenngröße des Motors, wobei der Messzeitpunkt bzw. die Messposition derart gewählt ist, dass die Induktivität des Motors auch bei unterschiedlichen Strömen durch den Motor zumindest in einem gegebenen Stromintervall näherungsweise konstant ist (also durch einen konstanten Induktivitätswert in dem gegebenen Stromintervall angenähert werden kann), wobei der Messzeitpunkt bzw. die Messposition insbesondere durch eine Optimierung bestimmt wird, bei die Abweichung der Induktivitätswerte von einem konstanten Induktivitätswert minimiert wird.

b) Messen der elektrischen Kenngröße des Motors zum Messzeitpunkt bzw. an der Messposition (Auslenkung des Motors aus der Ruhelage).

c) Berechnen einer Bewegungsgröße des Motors aus der elektrischen Kenngröße und einem konstanten Induktivitätswert.

d) Ansteuerung des Motors in Abhängigkeit von der berechneten Bewegungsgröße.

In einer Ausführungsform des Verfahrens umfasst der Schritt des Bereitstellens das Bereitstellen von je einem Messzeitpunkt bzw. einer Messposition für mindestens zwei unterschiedliche Schwingungsamplituden, wobei die Messzeitpunkte bzw. Messpositionen derart bestimmt werden, dass die Induktivität des Motors auch bei unterschiedlichen Strömen durch den Motor zumindest innerhalb eines interessierenden Stromintervalls für alle Schwingungsamplituden näherungsweise konstant ist. Hierbei werden die Messzeitpunkte bzw. Messpositionen insbesondere mittels einer Optimierung bestimmt, bei der eine Abweichung von einem konstanten Induktivitätswert minimiert wird.

Die Erfindung betrifft auch ein Elektrokleingerät, insbesondere eine elektrisch angetriebene Zahnbürste oder einen Rasierer, in dem eine erfindungsgemäße Anordnung zum Einsatz kommt oder das zum Ausführen einer erfindungsgemäßen Verfahrens ausgestattet ist.

Die Erfindung wird im Weiteren durch detaillierte Besprechung exemplarischer Ausführungsformen und mit Bezug auf Figuren näher beschrieben. Dabei zeigen in den Figuren

Fig. 1 eine schematische Darstellung einer Ausführungsform einer erfindungsgemäßen Anordnung mit einem schwingenden Motor,

Fig. 2 eine beispielhafte Darstellung der funktionellen Abhängigkeit der Induktivität des Motors von der Stromaufnahme für verschiedene Schwingungsamplituden und Messpositionen,

Fig. 3 eine Darstellung der Abhängigkeit der Messposition zu einem festen Messzeitpunkt bei Schwingungsverläufen des Motors mit unterschiedlichen Schwingungsamplituden,

Fig. 4 eine beispielhafte Darstellung der funktionalen Abhängigkeit der Induktivität des Motors von der Stromaufnahme bei einem festen Messzeitpunkt und dadurch gegebenen unterschiedlichen Messpositionen für verschiedene Schwingungsamplituden,

Fig. 5 eine Darstellung der Abhängigkeit der Messposition bei unterschiedlichem Messzeitpunkt bei Schwingungsverläufen des Motors mit unterschiedlichen Schwingungsamplituden,

Fig. 6 eine beispielhafte Darstellung der funktionalen Abhängigkeit der Induktivität des Motors von der Stromaufnahme bei einem variierenden Messzeitpunkt und dadurch gegebenen Messpositionen für verschiedene Schwingungsamplituden, wobei der Messzeitpunkt jeweils so gewählt ist, dass für einen interessanten Bereich die Induktivität näherungsweise konstant ist, und

Fig. 7 ein exemplarisches Elektrokleingerät, in dem eine Anordnung wie beschrieben zum Einsatz kommt.

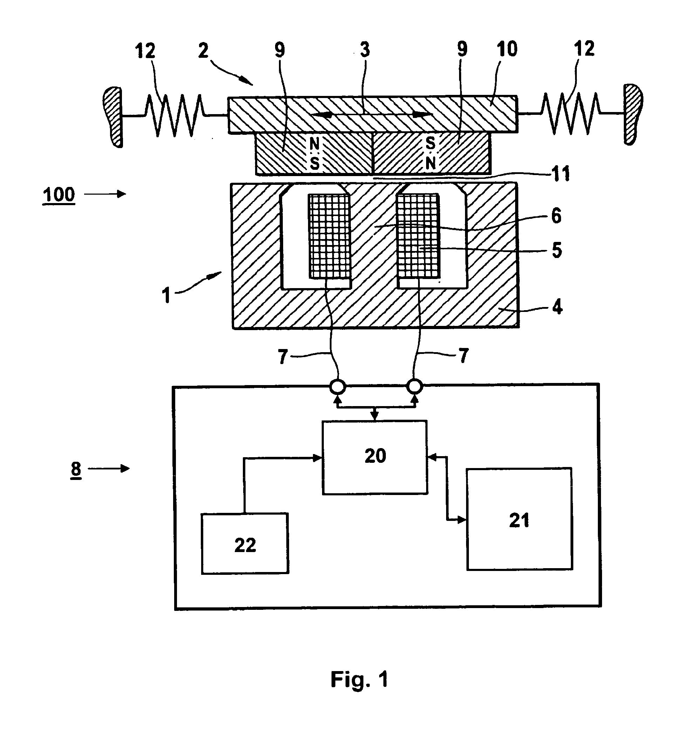

Fig. 1 zeigt ein exemplarisches Ausführungsbeispiel eines schwingenden Motors 100 als oszillierender Linearmotor in schematischer Darstellung. Ein solcher Linearmotor wird etwa bei Elektrorasierern eingesetzt. Ein schwingender Motor kann auch bezüglich einer Achse rotierend oszillieren. Der in Fig. 1 gezeigte Linearmotor 100 weist einen ortsfest angeordneten Stator 1 auf und einen Läufer 2, der eine lineare Bewegung in den mit einem Doppelpfeil 3 bezeichneten Richtungen ausführen kann. Alternativ dazu kann der Stator 1 bezüglich seiner Bewegungsfreiheitsgrade entsprechend dem Läufer 2 ausgebildet sein, d. h. der Stator 1 kann durch eine Komponente ersetzt werden, die im Hinblick auf ihre Beweglichkeit dem Läufer 2 entspricht, ansonsten aber die Funktionsmerkmale des Stators 1 aufweist. Da sich die Darstellung der Erfindung dadurch vereinfacht, wird im Folgenden jedoch ausschließlich das Ausführungsbeispiel mit ortsfest angeordnetem Stator 1 herangezogen. Der Stator 1 besteht hier aus einem Eisenkern 4, der in Form eines "E" ausgebildet ist, und einer aus Draht gewickelten Statorspule 5. Die Statorspule 5 ist um einen Mittelbalken 6 des Eisenkerns 4 gewickelt und über Anschlussleitungen 7 elektrisch mit einem Steuergerät 8 verbunden. Der Läufer 2 weist zwei Dauermagnete 9 auf, die jeweils mit einem ihrer Pole an einer Trägerplatte 10 anliegen und mit antiparalleler Orientierung dicht nebeneinander angeordnet sind. Die Dauermagnete 9 sind bis auf einen Luftspalt 11 der Stirnseite des Mittelbalkens 6 des Eisenkerns 4 angenähert. Die Trägerplatte 10 besteht ebenso wie der Eisenkern 4 aus einem Eisenwerkstoff und ist an zwei entgegen gesetzten Seiten jeweils mit einem Ende je einer Schraubenfeder 12 verbunden. Die anderen Enden der Schraubenfedern 12 sind ortsfest aufgehängt, beispielsweise an einem Gehäuse eines elektrischen Kleingeräts, in das der Linearmotor eingebaut ist, so dass der Läufer 2 in den mit dem Doppelpfeil 3 bezeichneten Richtungen lineare Schwingungsbewegungen ausführen kann. Natürlich ist diese Ausführungsform eines linear oszillierenden Direktantriebs nur exemplarisch und alle anderen bekannten oder nahe liegenden Ausführungsformen von Direktantrieben sollen ebenfalls vom Begriff des schwingenden Motors mit umfasst sein.

Im Betriebszustand des schwingenden Motors wird durch eine entsprechende Ansteuerung mittels des Regelungsgeräts 8 ein Stromfluss durch die Statorspule 5 hergestellt, so dass sich im Eisenkern 4 ein Magnetfeld aufbaut. Insbesondere im Bereich der Stirnfläche des Mittelbalkens 6 des Eisenkerns 4 wirkt das Magnetfeld auf die Dauermagnete 9 ein und bewirkt bei der in Fig. 1 dargestellten Geometrie eine seitliche Verschiebung des Läufers 2 relativ zum Stator 1. Die Richtung der Verschiebung hängt von der Stromrichtung in der Statorspule 5 ab. Mittels einer Variation des Stromflusses durch die Statorspule 5, bei der in der Regel auch die Stromrichtung variiert wird, und unterstützt von den Schraubenfedern 12 kann der Läufer 2 in eine lineare Schwingungsbewegung versetzt werden.

Die Ansteuerung der Statorspule 5 durch das Regelungsgerät 8 wird zeitlich auf den Bewegungszustand des Läufers 2 abgestimmt, um mit dem erzeugten Stromfluss durch die Statorspule 5 jeweils die gewünschte Wirkung zu erzielen. Weiterhin wird die über das Magnetfeld der Statorspule 5 dem Läufer 2 jeweils zugeführte Energie von den jeweiligen Erfordernissen abhängig gemacht. Insbesondere wird diese Energie so bemessen, dass die Schwingungsamplitude möglichst konstant gehalten wird, und zwar auch dann, wenn der Läufer 2 einer schwankenden Belastung ausgesetzt ist. Die schwankende Belastung wird durch eine entsprechende Variation des Stromflusses durch die Statorpule 5 ausgeglichen.

Das Regelungsgerät 8 besteht in der gezeigten Ausführungsform aus einem Mess- und Regelschaltkreis 20, mittels dem zu mindestens einem gegebenen Messzeitpunkt (oder an einer gegebenen Messposition) innerhalb der Schwingungsperiode des Motors eine elektrische Kenngröße des Motors gemessen wird. Die elektrische Kenngröße wird mittels einer Recheneinheit 21 und einem Induktivitätswert der Statorspule 5 in eine Bewegungsgröße des Motors umgerechnet. Der Strom zum Motor wird dann vom Mess- und Regelschaltkreis 20 auf Basis der Bewegungsgröße geregelt. Das Regelungsgerät 8 kann einen Speicher 22 zum Speichern des Messzeitpunktes (oder der Messposition) aufweisen; in dem Speicher 22 kann auch ein Induktionswert des Motors gespeichert sein.

Für eine Regelung der Schwingungsamplitude auf einen konstanten Wert ist es erforderlich, jeweils die Schwingungsamplitude oder eine damit zusammenhängende Größe zu ermitteln. Die tatsächliche Schwingungsamplitude oder eine damit zusammenhängende Größe, wie etwa die Läufergeschwindigkeit zu einem gegebenen Messzeitpunkt innerhalb der Schwingungsperiode (wobei dem Messzeitpunkt bei einer periodischen Schwingung eine Messposition, also eine Auslenkung des Motors aus seiner Ruheposition, eindeutig zugeordnet ist), sind Bewegungsgrößen des Motors. Da bei einem in Resonanz schwingenden System die Schwingungsfrequenz bekannt ist, kann aus der Läufergeschwindigkeit zu einem Messzeitpunkt oder bei einer Messposition innerhalb der Schwingungsperiode die Schwingungsamplitude bestimmt werden. Für die Ermittlung der Bewegungsgröße wird eine elektrische Kenngröße des Motors, etwa die von den bewegten Dauermagneten 9 in der Statorspule 5 induzierte Spannung $U_L$, herangezogen.

Die an der Motorspule anliegende Spannung $U_M$ ergibt sich aus der Summe von Spannungsabfall am ohmschen Widerstand der Spule, der selbstinduzierten Spannung $U_L$ und der bewegungsinduzierten Spannung $U_i$. Allgemeiner lässt sich das auch durch das Kirchhoffsche Spannungsgesetz ausdrücken:

$$U_M = I \cdot R + \frac{\partial \psi}{\partial I}\frac{\partial I}{\partial t} + \frac{\partial \psi}{\partial x}\frac{\partial x}{\partial t},$$

wobei $I$ der durch die Spule fließende Strom, R der ohmsche Widerstand der Spule, $\psi$ der verkettete magnetische Fluss, $x$ die Läuferposition ist und $t$ die Zeit ist. Bei Annahme einer konstanten Induktivität wird $\partial \psi / \partial I = L = const.$ eingesetzt. Die Annahme einer konstanten Induktivität ist jedoch nur bedingt möglich und führt etwa bei hohen Belastungen des Motors zu einer Instabilität der Regelung. Bekanntermaßen ist die Induktivität $L$ nicht konstant und die nichtlineare, differentielle Induktivität $L_{diff}(I) = \partial \psi / \partial I$ ist zu berücksichtigen. Weiterhin wird auch $\partial \psi / \partial x = k_M = const.$ als die Motorkonstante bezeichnet.

Die Zusammenhänge zwischen der elektrischen Kenngröße und der Bewegungsgröße sind in der DE 102 29 319 A1 beschrieben, wobei diese Zusammenhänge durch Bezug auf dieses Dokument als inkorporiert gelten sollen. Die gesamte an der Statorspule 5 anliegende Spannung $U_M$ ergibt sich aus der Summe der Spannung $U_R$, die am Ohmschen Widerstand der Statorspule 5 abfällt, der selbstinduzierten Spannung $U_L$ und der durch die Dauermagnete 9 induzierte Spannung $U_i$

$$U_M = U_R + U_L + U_i = R \cdot I + L \cdot dI/dt + v \cdot k_M$$

Die am Ohmschen Widerstand abfallende Spannung $U_R$ berechnet sich dabei aus dem Produkt von Widerstandswert der Statorspule R und Strom $I$, die induzierte Spannung $U_i$ ergibt sich aus der Läufergeschwindigkeit $v$ und einer Proportionalitätskonstante, der Motorkonstanten $k_M$, und die selbstinduzierte Spannung $U_L$ ist dabei durch das Produkt der Induktivität $L$ des Motors zum gegebenen Messzeitpunkt und die zeitliche Stromänderung $dI/dt$ gegeben. Die Induktivität $L$ des Motors hängt von der Stromaufnahme $I$ des Motors, dem Messzeitpunkt $t$ bzw. der damit eindeutig verknüpften Messposition $x$ (der Auslenkung des Motors aus seiner Ruhelage) und der zeitlichen Stromänderung $dI/dt$ ab:

$$U_L = L(I, dI/dt, t \text{ bzw. } x) \cdot dI/dt$$

Sind die Größen bekannt, dann kann aus der Messung der an der Statorspule 5 abfallenden Spannung $U_M$ die Läufergeschwindigkeit $v$ bestimmt werden. In bisherigen Anwendungen war dabei die Induktivität $L$ als konstant angenommen worden, was bei besonderen Umständen (bestimmte Belastungen des Motors) allerdings zu Instabilitäten in der Regelung geführt hat. Prinzipiell kann die Induktivität $L$ in Abhängigkeit von Stromaufnahme $I$, Messzeitpunkt $t$ bzw. Messposition $x$ und Stromänderung d$I$/dt berechnet werden und kann dann aus einer Look-Up-Tabelle ausgelesen werden oder die Induktivität $L$ kann durch eine Polynomapproximation oder eine ähnliche Vorgehensweise berechnet werden. In letzterem Fall müssen nur die Koeffizienten der Approximationsfunktion gespeichert werden und nicht eine ganze Look-Up-Tabelle. Diese beiden Vorgehensweisen benötigen allerdings größere Resourcen an Bauteilen (Speicher, Prozessor), entweder zum Speichern der Look-Up-Tabelle oder zum Berechnen der Approximationsfunktion. Die notwendigen Speicher und/oder Prozessoren lassen sich allerdings weder besonders kostengünstig noch platzsparend realisieren. Daher wird im Folgenden eine Alternative beschrieben, die die Nachteile einer Look-Up-Tabelle oder einer Approximationsfunktion umgeht. Im Wesentlichen wird hierbei die Messposition bzw. der Messzeitpunkt so gewählt, dass die Induktivität $L$ des Motors auch bei variierender Stromaufnahme $I$ zumindest in einem interessierenden Bereich näherungsweise konstant ist und dann aufgrund besonders gewählter Messzeitpunkte bzw. Messpositionen weiterhin mit einem einzigen, konstanten Induktivitätswert $L = const.$ Gearbeitet werden kann. Große Speicher oder Prozessoren für Look-Up-Tabellen oder für Polynomapproximationsberechnungen sind dann nicht notwendig. Soll diese Vorgehensweise für mehrere stabil zu haltende Schwingungsamplituden des Motors verwendet werden, dann wird jeder Schwingungsamplitude ein entsprechender Messzeitpunkt oder eine Messposition innerhalb der Schwingungsperiode zugewiesen, wobei die Messzeitpunkte bzw. Messpositionen so gewählt werden, dass für alle Schwingungsamplituden und zumindest in einem interessierenden Bereich variierender Stromaufnahme die Induktivität $L$ des Motors näherungsweise konstant ist. Zur Optimierung der Messzeitpunkte bzw. Messpositionen kann etwa ein bekannter Optimierungsalgorithmus verwendet werden, mittels dem die quadratische Abweichung von einem mittleren Induktivitätswert minimiert wird. Dazu wird die Induktivität des Motors mit einem geeigneten Prüfstand für die verschiedenen Parameter wie Messzeitpunkt bzw. Messposition, Stromaufnahme und Schwingungsamplitude gemessen und die Messergebnisse werden für die Optimierung verwendet.

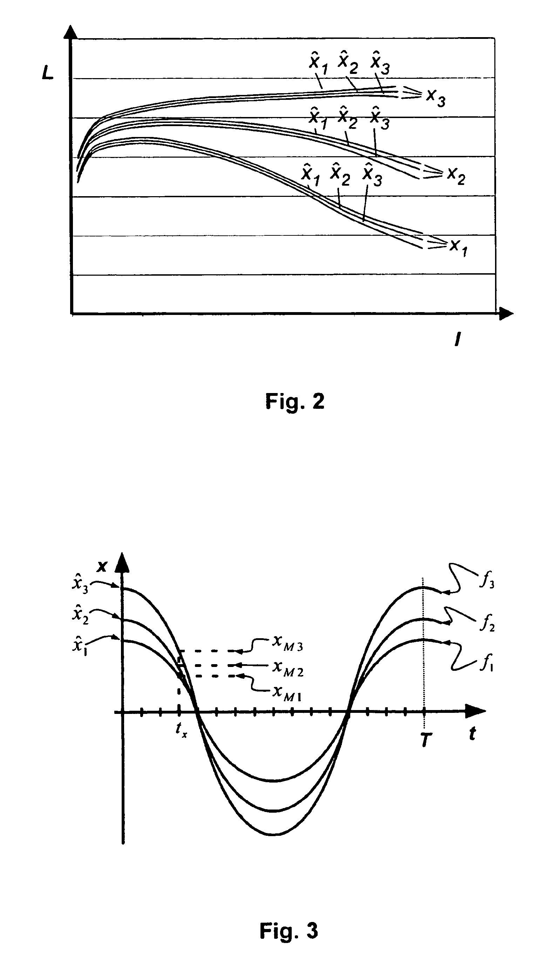

In Fig. 2 ist der prinzipielle funktionelle Verlauf der Induktivität $L$ des Motors gegen den vom Motor aufgenommenen Strom $I$ dargestellt für verschiedene Motorpositionen $x_1$, $x_2$ und $x_3$ bei verschiedenen Schwingungsamplituden $\hat{x}_1$, $\hat{x}_2$ und $\hat{x}_3$. Es ist erkennbar, dass die Induktivität $L$ insbesondere eine starke Abhängigkeit von der Motorposition $x$ (hier: der Auslenkung des Läufers aus der Ruheposition) hat. Typische Werte für die Schwingungsamplituden, die bei einem linear oszillierenden Direktantrieb, wie er für einen Trockenrasierer eingesetzt wird, zur Anwendung kämen sind etwa: $\hat{x}_1$ = 1 mm, $\hat{x}_2$ = 1.4 mm und $\hat{x}_3$ = 1.7 mm.

In Fig. 3 ist der funktionelle Verlauf der Motorposition $x$ in Abhängigkeit von der Zeit $t$ für die verschiedenen Schwingungsamplituden $\hat{x}_1$, $\hat{x}_2$ und $\hat{x}_3$ gezeigt. Die Funktionen $f_1$, $f_2$ und $f_3$ entsprechen dabei den Motorpositionsverläufen für die Schwingungsamplituden $\hat{x}_1$, $\hat{x}_2$ und $\hat{x}_3$. Die Zeit $T$ entspricht dabei der Schwingungsdauer innerhalb der eine Schwingungsperiode ausgeführt wird, die bei dem in Resonanz schwingenden Linearmotor für alle Schwingungsamplituden $\hat{x}_1$, $\hat{x}_2$ und $\hat{x}_3$ gleich ist. Der Messzeitpunkt $t_x$ liegt bei 3/16 $T$ nach dem positiven Schwingungsmaximum, der Nulldurchgang der Schwingung erfolgt bei 4/16 $T$.

Wird also, wie in Fig. 3 gezeigt, zu einem gleichen relativen Zeitpunkt $t_x$ in der Schwingungsperiode des linearen Motors für die unterschiedlichen Schwingungsamplituden $\hat{x}_1$, $\hat{x}_2$ und $\hat{x}_3$ die elektrische Kenngröße des Motors bestimmt, führt dies aufgrund der unterschiedlichen absoluten Messpositionen $x_{M1}$, $x_{M2}$ und $x_{M3}$, also der Positionen an denen sich der Motor jeweils zum Messzeitpunkt $t_x$ befindet, zu einem deutlich unterschiedlichen Induktivitätswert $L$ bei einer gegebenen Stromaufnahme $I$ für die verschiedenen Schwingungsamplituden. Bei einer als konstant angenommenen Induktivität $L$ führt dies dazu, dass die Bestimmung der Bewegungsgröße (etwa Geschwindigkeit $v$ des Läufers) aus der elektrischen Kenngröße (etwa die an der Statorspule abfallende Spannung $U_M$) mit einem entsprechenden Fehler behaftet ist. Dies führt in einigen Fällen dazu, dass die Motorregelung außer Kontrolle gerät und eine große Motorbelastung nicht durch entsprechend korrigierende Stromzufuhr ausgeglichen werden kann. Der Regelkreis wird dann instabil. Diese Problematik wird noch prägnanter, wenn der Regelkreis nicht nur bei einer Schwingungsamplitude angewendet wird, sondern mehrere unterschiedliche Schwingungsamplituden durch den Regelkreis stabil gehalten werden sollen.

Bei den angegebenen Schwingungsamplituden von $\hat{x}_1$ = 1 mm, $\hat{x}_2$ = 1.4 mm und $\hat{x}_3$ = 1.7 mm ergeben sich bei dem konstanten Messzeitpunkt $t_x$ = 3/16 $T$ Messpositionen (also Auslenkungen des Motorläufers) zu $x_{M1}$ = 0.38 mm, $x_{M2}$ = 0.53 mm und $x_{M3}$ = 0.65 mm.

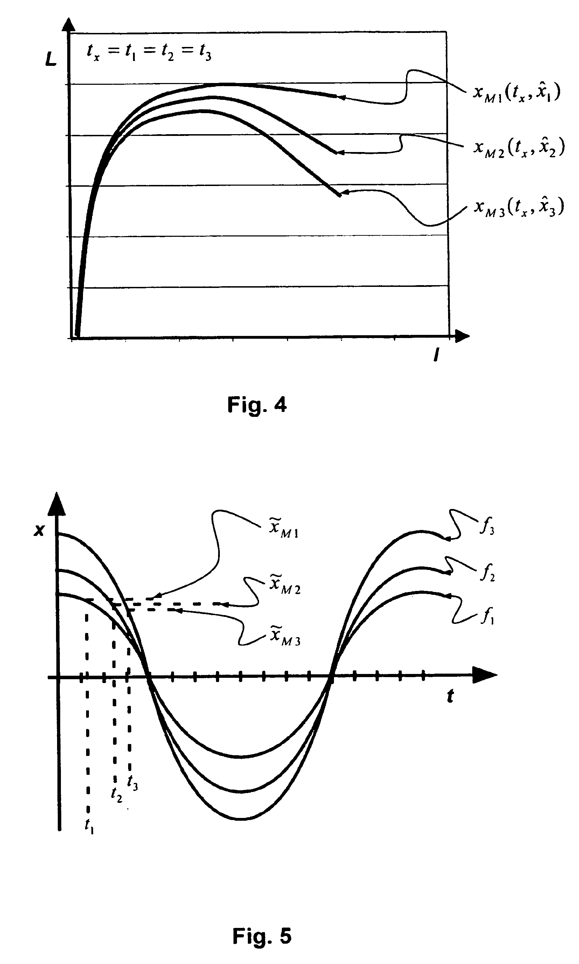

In Fig. 4 ist beispielhaft der funktionelle Verlauf der Induktivität $L$ des Motors gegen die Stromaufnahme $I$ gezeigt, wobei die verschiedenen Funktionsverläufe für die unterschiedlichen Schwingungsamplituden $\hat{x}_1$, $\hat{x}_{X2}$ und $\hat{x}_3$ gelten, wenn zu einem festen Messzeitpunkt $t_1 = t_2 = t_3 = t_x$ in der Schwingungsperiode gemessen wird, was eben zu den unterschiedlichen Messpositionen $x_{M1}$, $x_{M2}$ und $x_{M3}$ zum Messzeitpunkt führt. Es ist erkennbar, dass bei variierender Stromaufnahme $I$ und bei unterschiedlichen Schwingungsamplituden $\hat{x}_1$, $\hat{x}_2$ und $\hat{x}_3$ deutlich andere Induktivitätswerte $L$ vorherrschen und eine Annahme der Induktivität $L$ als konstant bei unterschiedlicher Stromaufnahme $I$ und bei unterschiedlichen Schwingungsamplituden $\hat{x}_1$, $\hat{x}_2$ und $\hat{x}_3$ nicht gerechtfertigt ist.

Um diese Problematik zu umgehen, wird vorgeschlagen, dass der Messzeitpunkt $t$ für die verschiedenen Schwingungsamplituden $\hat{x}_1$, $\hat{x}_2$ und $\hat{x}_3$ nicht gleich gewählt wird, sondern für jede Schwingungsamplitude $\hat{x}_1$, $\hat{x}_2$ und $\hat{x}_3$

ein entsprechender (typischerweise unterschiedlicher) Messzeitpunkt $t_1$, $t_2$ und $t_3$ derart gewählt wird, sodass eine Annahme der Induktivität $L$ als konstant zumindest näherungsweise verwendet werden kann und somit eine Stabilität der Regelung besser gesichert ist. Dies wird in Fig. 5 verdeutlicht. In Fig. 5 sind wie in Fig. 3 die funktionellen Verläufe der Motorposition $x$ in Abhängigkeit von der Zeit $t$ für drei verschiedene Schwingungsamplituden $\hat{x}_1$, $\hat{x}_2$ und $\hat{x}_3$ gezeigt. Es werden nun für jede Schwingungsamplitude durch einen Optimierungsvorgang Messzeitpunkte $t_1$, $t_2$ und $t_3$ festgelegt, die unterschiedlich sind. In Fig. 5 wird zum Messzeitpunkt $t_1$ die elektrische Kenngröße für die Schwingungsamplitude $\hat{x}_1$ bestimmt, wobei der Motor dann an der Messposition $\tilde{x}_{M1}$ ist. Weiter wird zum Messzeitpunkt $t_2$ die elektrische Kenngröße für die Schwingungsamplitude $\hat{x}_2$ bestimmt, wobei der Motor dann an der Messposition $\tilde{x}_{M2}$ ist, und es wird zum Messzeitpunkt $t_3$ die elektrische Kenngröße für die Schwingungsamplitude $x_3$ bestimmt, wobei der Motor dann an der Messposition $\tilde{x}_{M3}$ ist. Die Messpositionen $\tilde{x}_{M1}$, $\tilde{x}_{M2}$ und $\tilde{x}_{M3}$ befinden sich in dieser beispielhaften Darstellung recht dicht beieinander, jedoch ist die genau Messposition (bzw. der Messzeitpunkt) eine Frage des jeweiligen Motors. Die Messzeitpunkte $t_i$, $t_2$ und $t_3$ könnten - insbesondere wenn die Optimierung dies ergibt - so gewählt werden, dass die Messpositionen $\tilde{x}_{M1}$, $\tilde{x}_{M2}$ und $\tilde{x}_{M3}$ übereinstimmen. Wie aus Fig. 2 erkennbar, sind dann die funktionalen Abhängigkeiten von dem aufgenommenen Strom $I$ und der Schwingungsamplitude bereits deutlich geringer als im Fall eines gleichen Messzeitpunktes $t_x$.

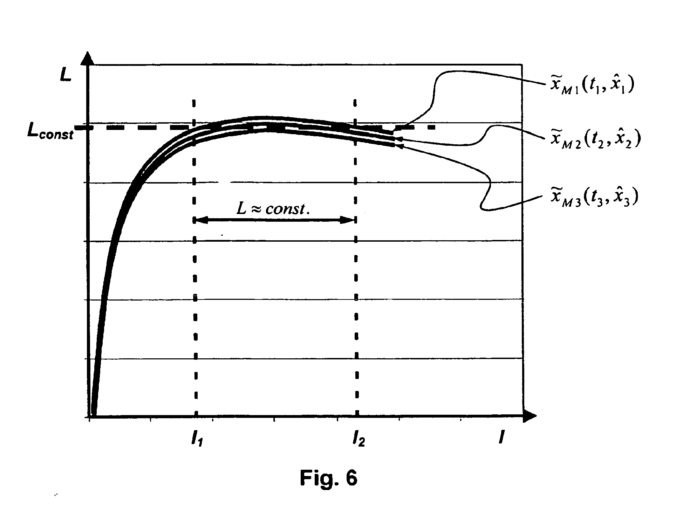

In Fig. 6 ist beispielhaft die funktionelle Abhängigkeit der Induktivität $L$ des Motors gegen die Stromaufnahme $I$ des Motors für verschiedene Messpositionen $\tilde{x}_{M1}$, $\tilde{x}_{M2}$ und $\tilde{x}_{M3}$ gezeigt, wobei die verschiedenen Messpositionen $\tilde{x}_{M1}$, $\tilde{x}_{M2}$ und $\tilde{x}_{M3}$ jeweils durch die Wahl eines Messzeitpunktes $t_1$, $t_2$ und $t_3$ für verschiedene Schwingungsamplituden $\hat{x}_1$, $\hat{x}_2$ und $\hat{x}_3$ bestimmt wurden. Die Messzeitpunkte $t_1$, $t_2$ und $t_3$ und damit die verschiedenen Messpositionen $\tilde{x}_{M1}$, $\tilde{x}_{M2}$ und $\tilde{x}_{M3}$ wurden so gewählt (insbesondere optimiert), dass die Induktivität $L$ des Motors bei unterschiedlicher Stromaufnahme $I$ zumindest in einem interessanten Gebiet (hier: innerhalb des Stromaufnahmeintervalls $I_1$ bis $I_2$) im Wesentlichen konstant ist, also $L \approx const$. Der konstante Induktivitätswert $L_{const}$ kann dann bei der Berechnung der Bewegungsgröße aus der elektrischen Kenngröße verwendet werden. In Fig. 6 ist durch eine gestrichelte Linie gezeigt, dass der konstanten Induktionswert $L_{const}$ als Mittelwert der Induktivitätswerte innerhalb des Stromintervalls für alle Schwingungsamplituden bestimmt wird. Die Induktivitätswerte werden insbesondere durch eine Messung bei den gegebenen Parametern wie Schwingungsamplitude und Stromaufnahme bestimmt und dienen dann als Grundlage für die Bestimmung des konstanten Induktivitätswertes $L_{const}$. Bei einer Optimierung können durchaus Messzeitpunkte $t_1$, $t_2$ und $t_3$ für verschiedene Schwingungsamplituden $\hat{x}_1$, $\hat{x}_2$ und $\hat{x}_3$ so bestimmt werden, dass unterschiedliche Messpositionen $\tilde{x}_{M1}$, $\tilde{x}_{M2}$ und $\tilde{x}_{M3}$ resultieren. Durch eine Optimierung bei der Wahl der Messzeitpunkte für die verschiedenen Schwingungsamplituden $\hat{x}_1$, $\hat{x}_2$ und $\hat{x}_3$ kann eine Annahme der Induktivität $L$ als konstant verwendet in der Berechnung der Bewegungsgröße verwendet werden, ohne dass es dabei zu Instabilitäten in der Regelung kommt. Das beschriebene Verfahren bzw. die entsprechende Anordnung kann bereits bei nur einer Schwingungsamplitude verwendet werden, um die Stabilität der Regelung zu erhöhen. Der konstante Induktivitätswert $L_{const}$ kann in einem Speicher (Referenzzeichen 22 in Fig. 1) gespeichert werden und zur Berechnung der Bewegungsgröße des Motors aus dem Speicher ausgelesen werden.

Bei den angegebenen Schwingungsamplituden von $\hat{x}_1 = 1$ mm, $\hat{x}_2 = 1.4$ mm und $\hat{x}_3 = 1.7$ mm ergeben sich für ein Motorbeispiel aus dem Trockenrasiererbereich Messpositionen (also Auslenkungen des Motorläufers) zu $\tilde{x}M_1 = 0.65$ mm, $\tilde{x}_{M2} = 0.76$ mm und $\tilde{x}_{M3} = 0.90$ mm (die Messzeitpunkte lassen sich mittels der Sinusfunktion bestimmen). Die Motorinduktivität (bei dem exemplarischen linear oszillierenden Direktantrieb wie er in einem Trockenrasierer verwendet wird) lag hierbei etwa bei $L = 270$ µH, die innerhalb eines Stromintervalls von $I_1 = 1.0$ A bis $I_2 = 4.5$ A annäherungsweise konstant für alle Schwingungsamplituden war. $I_1$ war dabei etwa 5% des maximalen Stroms, der systembedingt möglich wäre $I_2$ war etwa 23% des maximalen Stroms. Es war eine näherungsweise Konstanz von 2% erreicht worden. Als konstanter Induktivitätswert $L_{const}$ konnte hierbei $L_{const} = 270$ µH verwendet werden, ohne dass es zu Instabilitäten oder zu falsch eingeregelten Schwingungsamplituden kommt.

In anderen Worten zusammengefasst wird also vorgeschlagen, dass durch vorangehende Messungen für einen gegebenen schwingenden Motor für eine oder mehrere Schwingungsamplituden je ein Messzeitpunkt oder eine Messposition derart bestimmt wird bzw. werden, dass die Induktivität $L$ des Motors auch bei sich ändernder Stromaufnahme und für die verschiedenen Schwingungsamplituden näherungsweise konstant bleibt und weiterhin mit einem konstanten Induktivitätswert $L_{const}$ die Bewegungsgröße des Motors aus der elektrischen Kenngröße berechnet werden kann.

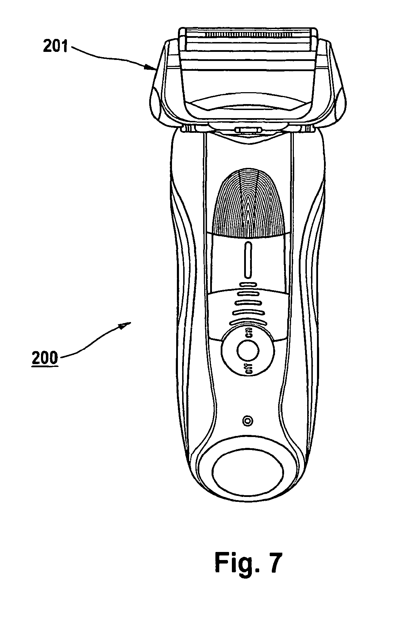

In Fig. 7 ist ein exemplarisches Elektrokleingerät 200, hier ein elektrischer Trockenrasierer, gezeigt, in dem die beschriebene Anordnung zum Einsatz kommt bzw. das zum Durchführen des beschriebenen Verfahrens ausgestattet ist. Das als Elektrorasierer ausgeführte Elektrokleingerät 200 hat einen Rasierkopf 201, in dem ein linear oszillierender Direktantrieb ein Untermesser gegen eine Scherfolie antreibt, sodass Haare, die durch die Scherfolie hindurch ragen, von dem Untermesser in bekannter Weise abgeschnitten bzw. abgeschert werden. Die beschriebene Anordnung zum Regeln des schwingenden Motors kann in einem solchen Elektrokleingerät 200 eingesetzt werden bzw. das Elektrokleingerät 200 kann zum durchführen des beschriebenen Verfahrens ausgestattet sein.

**Patentansprüche**

1. Anordnung mit

   o einem schwingenden Motor (100),
   o einem Regelkreis (20) zum Ansteuern des Motors (100),
   o einem Speicher (22), in dem für mindestens zwei Schwingungsamplituden ($\hat{x}_1$, $\hat{x}_2$, $\hat{x}_3$) des Motors (100) je ein Messzeitpunkt ($t_1$, $t_2$, $t_3$) oder je eine Messposition ($\tilde{x}_{M1}$, $\tilde{x}_{M2}$, $\tilde{x}_{M3}$) gespeichert ist, wobei für die Messzeitpunkte ($t_1$, $t_2$, $t_3$) oder die Messpositionen ($\tilde{x}_{M1}$, $\tilde{x}_{M2}$, $\tilde{x}_{M3}$) gilt, dass die Induktivität ($L$) des Motors (100) auch bei unterschiedlichen Strömen ($I$) durch den Motor (100) zumindest in einem Stromintervall ($I_1$, $I_2$) näherungsweise konstant ist,
   o einer Sensoranordnung (5) zur Bestimmung einer elektrischen Kenngröße des Motors (100) zu einem vorgegebenen Messzeitpunkt ($t_1$, $t_2$, $t_3$) oder an einer vorgegebenen Messposition ($\tilde{x}_{M1}$, $\tilde{x}_{M2}$, $\tilde{x}_{M3}$) während eines Schwingungsvorgangs,
   o und einer Recheneinheit (21) zur Bestimmung einer Bewegungsgröße des Motors (100) mittels zumindest der elektrischen Kenngröße und einem konstanten Induktivitätswert ($L_{const}$) des Motors (100),

   wobei der Regelkreis (20) im Betriebszustand den Motor (100) in Abhängigkeit von der Bewegungsgröße ansteuert.

2. Anordnung nach Anspruch 1, wobei die Sensoranordnung (5) durch eine Statorspule des Motors (100) gebildet wird.

3. Anordnung nach einem der Ansprüche 1 bis 2, wobei der Regelkreis (20) und/oder die Recheneinheit (21) und/oder der Speicher (22) mittels eines Mikrocontrollers realisiert sind.

4. Verfahren zur Regelung eines schwingenden Motors (100), das die folgenden Schritte aufweist:

   o Bereitstellen je eines Messzeitpunkts ($t_1$, $t_2$, $t_3$) oder je einer Messposition ($\tilde{x}_{M1}$, $\tilde{x}_{M2}$, $\tilde{x}_{M3}$) innerhalb einer Schwingungsperiode des Motors (100) für mindestens zwei vorgegebene Schwingungsamplituden ($\hat{x}_1$, $\hat{x}_2$, $\hat{x}_3$) des Motors (100), wobei für die Messzeitpunkte ($t_1$, $t_2$, $t_3$) oder die Messpositionen ($\tilde{x}_{M1}$, $\tilde{x}_{M2}$, $\tilde{x}_{M3}$) gilt, dass die Induktivität ($L$) des Motors (100) auch bei unterschiedlichen Strömen ($I$) durch den Motor (100) zumindest in einem Stromintervall ($I_1$, I2) näherungsweise konstant ist,
   o Messen einer elektrischen Kenngröße an dem vorgegebenen Messzeitpunkt ($t_1$, $t_2$, $t_3$) oder an der vorgegebenen Messposition ($\tilde{x}_{M1}$ $\tilde{x}_{M2}$, $\tilde{x}_{M3}$),
   o Berechnen einer Bewegungsgröße des Motors (100) aus der elektrischen Kenngröße und einem als konstant angenommenen Induktivitätswert ($L_{const}$) des Motors (100) und
   o Ansteuern des Motors (100) in Abhängigkeit von der Bewegungsgröße.

5. Elektrokleingerät (200), insbesondere Zahnbürste oder Rasierer, mit einer Anordnung nach einem der Ansprüche 1 bis 3.

6. Elektrokleingerät (200), insbesondere Zahnbürste oder Rasierer, das zum Ausführen eines Verfahrens nach Anspruch 4 ausgestattet ist.

**Claims**

1. An arrangement with

   o an oscillating motor (100);
   o a control circuit (20) for controlling the motor (100);
   o a memory (22) in which for at least two oscillation amplitudes ($\hat{x}_1$, $\hat{x}_2$, and $\hat{x}_3$) of the motor (100) a respective measurement time point (t1, t2, t3) or a respective measuring position ($\tilde{x}$M1, $\tilde{x}$M2, $\tilde{x}$M3) is stored, wherein for the measurement time points (t1, t2, t3) or the measuring positions ($\tilde{x}$M1, $\tilde{x}$M2, $\tilde{x}$M3) the inductance (L) of the motor (100) is approximately constant, even at different currents (I) through the motor (100), at least in a certain interval of current values (I1, I2);
   o a sensor arrangement (5) for determining an electrical parameter of the motor (100) at a prescribed measurement time point (t1, t2, t3) or at a prescribed measuring position ($\tilde{x}$M1, $\tilde{x}$M2, $\tilde{x}$M3) during an oscillation process;
   o and a computing unit (21) for determining a movement parameter of the motor (100) by means of at least the electrical parameter and a constant inductance value (Lconst) of the motor (100);

wherein the control circuit (20) in the operating state exerts control on the motor (100) depending on the movement parameter.

2.  The arrangement according to claim 1, wherein the sensor arrangement (5) is formed from a stator winding of the motor (100).

3.  The arrangement according to claim 1 or 2, wherein the control circuit (20) and/or the computing unit (21) and/or the memory (22) is/are implemented by means of a microcontroller.

4.  A method of controlling an oscillating motor (100), comprising the following steps:

    o providing a respective measurement time point (t1, t2, t3) or a respective measuring position ($\tilde{x}M\ 1$, $\tilde{x}M2$, $\tilde{x}M3$) within an oscillation period of the motor (100) for at least two prescribed oscillation amplitudes ($\hat{x}1$,$\hat{x}2$, and $\hat{x}3$) of the motor (100), wherein for the measurement time points (t1, t2, t3) or the measuring positions ($\tilde{x}M\ 1$, $\tilde{x}M2$, $\tilde{x}M3$) the inductance (L) of the motor (100) is approximately constant, even for different currents (I) through the motor (100), at least in a certain current interval (I1, I2);
    o measuring an electrical parameter at the prescribed measurement time point (t1, t2, t3) or at the prescribed measuring position ($\tilde{x}M1$, $\tilde{x}M2$, $\tilde{x}M3$);
    o calculating a movement parameter of the motor (100) from the electrical parameter and an inductance value (Lconst) of the motor (100) which inductance value is assumed to be constant; and
    o controlling of the motor (100) based on the movement parameter.

5.  A small electrical device (200), preferably a toothbrush or shaver, having an arrangement according to one of claims 1-3.

6.  A small electrical device (200), preferably a toothbrush or shaver, equipped to carry out the method according to claim 4.


**Revendications**

1.  Dispositif équipé

    o d'un moteur oscillant (100),
    o d'un circuit de régulation (20) pour la commande du moteur (100),
    o d'une mémoire (22) dans laquelle pour chacune d'au moins deux amplitudes d'oscillation ($x_1$, $x_2$,$x_3$) du moteur (100) un moment de mesure $(t_1, t_2, t_3)$ ou une position de mesure $(x_{M1}, x_{M2}, x_{M3})$ est stocké, dans lequel pour les moments de mesure $(t_1, t_2, t_3)$ ou les positions de mesure $(x_{M1}, x_{M2}, x_{M3})$ il est supposé que l'inductance ($L$) du moteur (100) est approximativement constante même avec des courants différents ($I$) à travers le moteur (100) au moins pendant un intervalle de courant ($I_1$, $I_2$),
    ○ d'un dispositif de capteur (5) pour déterminer un paramètre électrique du moteur (100) à un moment de mesure prédéfini $(t_1, t_2, t_3)$ ou sur une position de mesure prédéfinie $(x_{M1}, x_{M3}, x_{M3})$ pendant le processus d'oscillation,
    o et une unité de calcul (21) pour la détermination d'une quantité de déplacement du moteur (100) au moyen au moins du paramètre électrique et d'une valeur d'inductance constante ($L_{const}$) du moteur (100),

    dans lequel le circuit de régulation (20) en fonctionnement, commande le moteur (100) en fonction de la quantité de déplacement.

2.  Dispositif selon la revendication 1, dans lequel le dispositif de capteur (5) est formé par une bobine de stator du moteur (100).

3.  Dispositif selon une des revendications 1 à 2, dans lequel le circuit de régulation (20 et/ou l'unité de calcul (21) et/ou la mémoire (22) sont réalisés au moyen d'un microcontrôleur.

4.  Procédé de régulation d'un moteur oscillant (100), comportant les étapes suivantes :

o la préparation d'un moment de mesure ($t_1$, $t_2$, $t_3$) ou d'une position de mesure ($x_{M1}$, $x_{M2}$, $x_{M3}$) pendant une période d'oscillation du moteur (100) pour au moins deux amplitudes d'oscillation prédéfinies ($x_1$, $x_2$, $x_3$) du moteur (100), dans lequel pour les moments de mesure ($t_1$, $t_1$, $t_3$) ou les positions de mesure ($x_{M1}$, $x_{M2}$, $x_{M3}$) il est supposé que l'inductance ($L$) du moteur (100) est approximativement constante même avec des courants différents *(I)* passant dans le moteur (100) au moins pendant un intervalle de courant *($I_1$, $I_2$)*,

o la mesure du paramètre électrique au moment de mesure prédéfini ($t_1$, $t_1$, $t_3$) ou à la position de mesure prédéfinie ($x_{M1}$, $x_{M2}$, $x_{M3}$),

o le calcul d'une quantité de déplacement du moteur (100) à partir du paramètre électrique et d'une valeur d'inductance considérée comme constante ($L_{const}$) du moteur (100) et

o la commande du moteur (100) en fonction de la quantité de déplacement.

**5.** Petit appareil électrique (200), en particulier brosse à dents ou rasoir, équipé d'un dispositif selon l'une des revendications 1 à 3.

**6.** Petit appareil électrique (200), en particulier brosse à dents ou rasoir, équipé pour la réalisation du procédé selon la revendication 4.

**Fig. 1**

**Fig. 2**

**Fig. 3**

**Fig. 4**

**Fig. 5**

$$\widetilde{x}_{M1}(t_1, \hat{x}_1)$$

$$\widetilde{x}_{M2}(t_2, \hat{x}_2)$$

$$\widetilde{x}_{M3}(t_3, \hat{x}_3)$$

$L \approx const.$

$L_{const}$

$l_1$ $l_2$ $l$

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10229319 A1
- US 5424637 A